# EUROPEAN PATENT SPECIFICATION

(11) **EP 2 574 600 B1**
(45) Date of publication and mention of the grant of the patent: **08.05.2019**
(21) Application number: 12184864.2
(22) Date of filing: 18.09.2012
(51) Int. Cl.: C02F 5/08, C02F 1/68

(54) **Water area equipment that can inhibit water scale formation**
Wasserbereichsanlage mit Möglichkeit zur Hemmung von Kesselsteinbildung durch Wasser
Équipement de zone d'eau qui peuvent inhiber la formation de tartre d'eau

(30) Priority: 29.09.2011 JP 2011214378; 14.02.2012 JP 2012029015
(43) Date of publication of application: 03.04.2013
(73) Proprietor: TOTO LTD., Kitakyushu-shi Fukuoka 802-8601 (JP)
(72) Inventor: Yagi, Shinichi, Kitakyushu-shi, Fukuoka 802-8601 (JP); Ichiki, Tomoyasu, Kitakyushu-shi, Fukuoka 802-8601 (JP); Amemori, Hiroaki, Kitakyushu-shi, Fukuoka 802-8601 (JP); Umemoto, Ayumu, Kitakyushu-shi, Fukuoka 802-8601 (JP); Morotomi, Yo, Kitakyushu-shi, Fukuoka 802-8601 (JP); Yamamoto, Masahiro, Kitakyushu-shi, Fukuoka 802-8601 (JP)
(74) Representative: Fédit-Loriot

(56) References cited:
- US-A- 3 627 032

## Description

### TECHNICAL FIELD

The present invention relates to a water area equipment that can inhibit water scale formation. More specifically, the present invention relates to a water area equipment that can inhibit water scale formation and further can very easily remove formed water scale. Further, the present invention relates to a water area equipment comprising a photocatalyst layer on its surface that can easily remove formed water scale.

### BACKGROUND ART

In water area equipments such as washing stands, lavatories, and bathrooms, water residual on the surface thereof is evaporated to form water scale which is deposited on the surface, smears the surface, and cannot be removed without difficulties because of strongly adhesion to the surface. In order to prevent such water scale-derived smearing, a method has been proposed in which calcium and magnesium ions which function as water scale components are previously removed from water to be applied to the water area equipment (for example, JP 2004-270185A (PTL 1)). This method can inhibit water scale formation but is disadvantageous in that the provision of a large apparatus is sometimes necessary and, further, due to high cost, the applicability is limited. Water scale based on a silicic acid component is adhered more easily and involves more difficulties for removal than water scale based on magnesium and calcium. In this patent document, however, no mention is made of the silicic acid component.

JP H07 (1995)-136660A (PTL 2) proposes the use of an acidic water (pH 4 to 6) in sterilization of water area equipments. In this patent document, however, no mention is made of the prevention of water scale formation.

In recent years, a technique in which a photocatalyst layer is provided on a base material to clean the surface of the base material through decomposition activity and hydrophilization activity of a photocatalyst has become used in a wide variety of applications including water area equipments. For example, JP H09 (1997)-78665 (PTL 4) discloses toilet bowls with a titanium oxide-containing layer formed thereon. The surface of these toilet bowls is cleaned by decomposition action and hydrophilization action of titanium oxide that is a photocatalyst excited by light irradiation.

According to the finding obtained by the present inventors, however, the water scale based on the silicic acid component, when adhered to the surface of the photocatalyst layer, deteriorates an appearance of the surface and also causes the decomposition action and the hydrophilization to disappear.

### [Citation List]

### [Patent Literature]

[PTL 1] JP 2004-270185A
[PTL 2] JP H07 (1995)-136660A
[PTL 3] JP 2004-92278A
[PTL 4] JP H09 (1997)-78665

Further, US 3 627 032 A discloses a water treatment system for a large capacity air conditioner or similar heat exchange system which includes a reservoir, a refrigeration unit, a cooling tower and flow means.

### SUMMARY OF THE INVENTION

The present inventors have now found that the inhibition of the polymerization of silicic acid can inhibit the formation of water scale and, at the same time, can allow formed water scale to be very easily removed, for example, by lightly wiping off the water scale. The present inventors have also found that the formation of water scale based on a silicic acid component on a photocatalyst layer results in a reduction in or disappearance of photocatalytic activity and the removal of the water scale can allow the reduced or disappeared photocatalytic activity to be returned to the original state. One of specific methods for inhibiting the polymerization of silicic acid is to raise acidity of water. The effect of inhibitiing water scale formation and easily removing formed water scale is enhanced by the presence of a metal ion. The present invention has been found based on such finding.

Accordingly, an object of the present invention is to provide an water area equipment that can inhibit the formation of water scale and also can allow formed water scale to be very easily removed,

Another object of the present invention is to provide a method that can inhibit the formation of water scale on the surface of various members and also can very easily remove formed water scale.

A further object of the present invention is to provide a water area equipment that can allow formed water scale to be very easily removed and comprises a photocatalyst layer as a surface layer

According to the present invention, there is provided a water area equipment on which water from a water supply source can be poured, the water area equipment comprising a unit configured to add an inhibitor for silicic acid polymerization to water deposited as water residual on the surface of the water area equipment.

In one embodiment of the present invention, a photocatalyst-containing layer is provided on the surface of the equipement.

In one embodiment of the present invention, the inhibitor for silicic acid polymerization is an aqueous solution having a high acidity. More specifically, the aqueous solution having a high acidity can adjust the acidity of the residual water to pH 1.5 to 5.5.

In another embodiment of the present invention, the aqueous solution having a high acidity further comprises a metal ion.

According to another embodiment of the present invention, there is provided a method for inhibiting water scale formation on the surface of a member having a possibility of water scale formation when water stays on the surface of the member and is evaporated, the method comprising at least adding an inhibitor for silicic acid polymerization to water residual on the surface of the member.

To the above end, there is provided a water area equipment comprising a toilet bowl having a surface that comprises a photocatalyst layer as a surface layer and a water supply unit and a unit configured to add an inhibitor for silicic acid polymerization including a coater through which water from a water supply source is to be poured onto the surface of the toilet bowl and to be deposited as residual water, the water supply unit and a unit configured to add an inhibitor for silicic acid polymerization being configured to spray-add an inhibitor for silicic acid polymerization to the residual water before the latter is evaporated.

Preferably, the inhibitor for silicic acid polymerization is an aqueous acid solution including nitric acid, hydrochloric acid, sulfuric acid, phosphoric acid, boric acid, acetic acid, glycolic acid, citric acid, oxalic acid, lactic acid and formic acid that can adjust the acidity of the residual water to pH 1.5 to 5.5.

Preferably still, the water area equipment further comprises an acid water generator configured to be supplied with tap water through a valve and to generate the inhibitor for silicic acid polymerization.

Preferably yet, the aqueous acid solution further comprises metal ions.

Preferably further, the inhibitor for silicic acid polymerization is previously added to water supplied from a water supply source.

The invention also relates to a method for inhibiting water scale formation on a water area equipment comprising a toilet bowl having a surface that comprises a photocatalyst layer as a surface layer and a water supply unit and a unit configured to add an inhibitor for silicic acid polymerization including a coater, the method comprising the steps of:
pouring, through the coater, water from a water supply source onto the surface of the toilet bowl and depositing the water as residual water; and
adding, by the water supply unit and a unit configured to add an inhibitor for silicic acid polymerization, an inhibitor for silicic acid polymerization to the residual water before the latter is evaporated.

Suitably, the inhibitor for silicic acid polymerization is an aqueous acid solution including nitric acid, hydrochloric acid, sulfuric acid, phosphoric acid, boric acid, acetic acid, glycolic acid, citric acid, oxalic acid, lactic acid and formic acid that can adjust the acidity of the residual water to pH 1,5 to 5.5.

Suitably still, the aqueous acid solution comprises a metal ion.

### BRIEF DESCRIPTION OF DRAWINGS

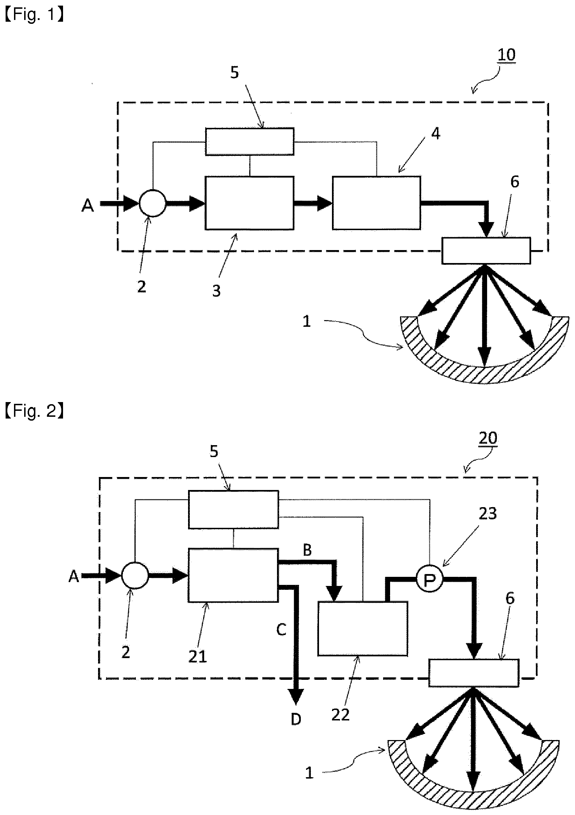

Fig. 1 is a conceptual view of a water area equipment in which a tap water is applied to an equipment 1 such as a toilet bowl by a coater 6 wherein acidity of the tap water is adjusted with an acidic water generator 3 and also metal ions are added to the tap water with a metal ion addition device 4.
Fig. 2 is a conceptual view of a water area equipment in which an acidic water is obtained by electrolysis with an electrolyzed acidic water generator 21 and metal ions in a metal ion addition tank 22 are added to the acidic water which is then applied to an equipment 1 such as a toilet bowl by a coater 6.

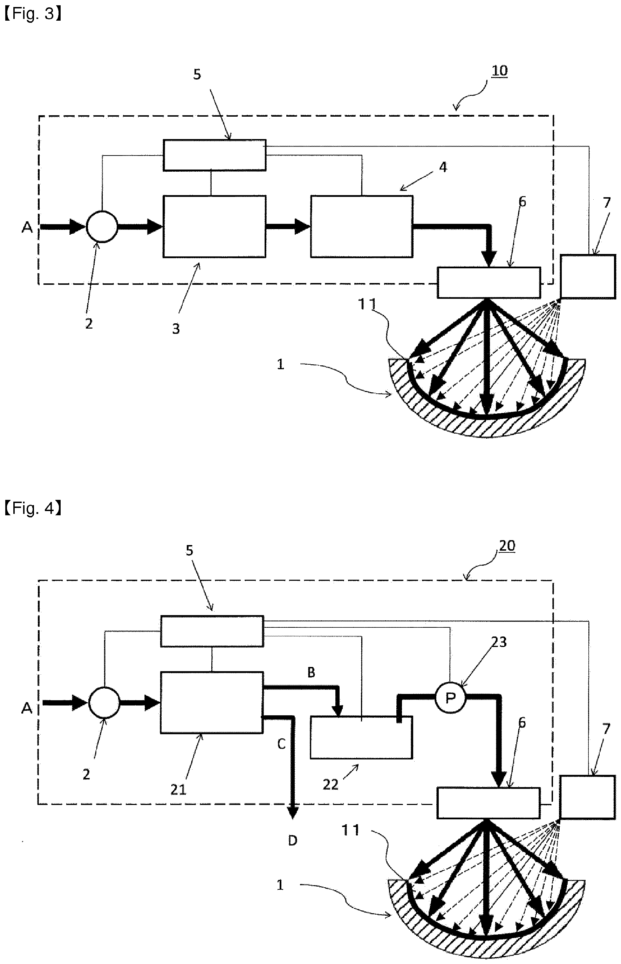

Fig. 3 is a conceptual view of a water area equipment in which a tap water is applied to an equipment 1 such as a toilet bowl by a coater 6 wherein acidity of the tap water is adjusted with an acidic water generator 3 and also metal ions are added to the tap water with a metal ion addition device 4. In the equipment, a photocatalyst layer 11 is provided on the surface of the equipment 1, and an irradiation device 7 that emits light capable of photoexciting the photocatalyt in the photocatalyst layer, preferably ultraviolet light, is provided.
Fig. 4 is a conceptual view of a water area equipment in which an acidic water is obtained by electrolysis with an electrolyzed acidic water generator 21 and metal ions in a metal ion addition tank 22 are added to the acidic water which is then applied to an equipment 1 such as a toilet bowl by a coater 6. In the equipment, a photocatalyst layer 11 is provided on the surface of the equipment 1, and an irradiation device 7 that emits light capable of photoexciting the photocatalyt in the photocatalyst layer, preferably ultraviolet light, is provided.

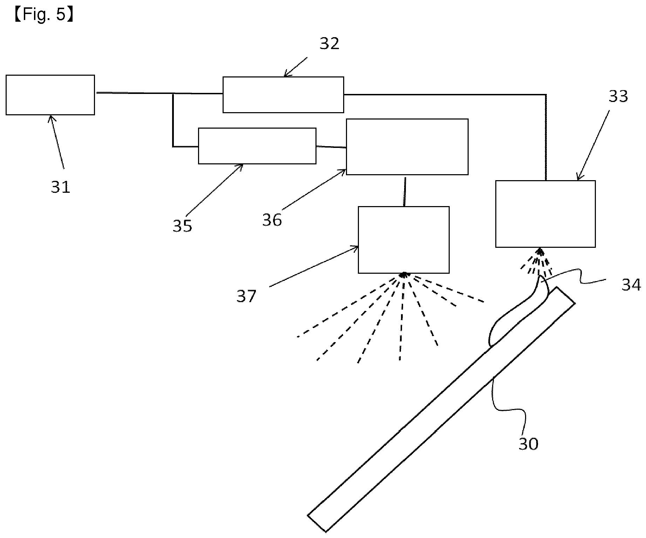

Fig. 5 is a typical view of an apparatus used in a water scale formation test in a working example.

### DESCRIPTION OF EMBODIMENTS

### Definition

The expression "water area equipment on which water from a water supply source can be poured" means an equipment that has a possibility that, after water is supplied from a water supply source followed by predetermined working or operation, supplied water stays on the surface of the equipment and as such is evaporated to form water scale that stays on the surface. In the present invention, as long as the equipment comprises a unit configured to add an inhibitor for silicic acid polymerization which will be described later to water adhered as residual water, water is not indispensable in the function inherent in the equipment, but it is an equipment that has a possibility that water from a water supply source reaches and stays on the surface and as such is evaporated to form water scale that stays on the surface. Specific examples of such equipments include wash basins, sinks, bathroom vanities, dishwashers, bidet devices and groin washing devices in bathrooms, and washing device in bathrooms, and further includes inner walls of rest rooms or bathrooms and mirrors and glass members used in rest rooms and bathrooms. In particular, the present invention is suitable for use in equipments that have a possibility that water contains silicic acid and water scale containing the silicic acid stays on the surface.

In the present invention, the water area equipment has a surface on which water can be poured and on which a layer comprising a photocatalyst (a photocatalyst layer) is provided. The photocatalyst layer, when has undergone photoexcitation, exhibits decomposition activity and/or hydrophilization activity. Photocatalysts having such activity are known in the art, and methods for forming the photoctalyst layer on the member are also known in the art. The photocatalyst layer in the water area equipment according to the present invention means a layer that can be provided using these known photocatalysts according to these known methods and would be understood as a photoctalyst layer by a person having ordinary skill in the art in the future. Further, a layer containing, in addition to the photocatalyst, other ingredients added for improving or modifying the photoctalystic activity also refers to a photocatalyst layer in the present invention. Methods known in the art for photocatalyst layer formation include methods disclosed in JP H09 (1997)-78665 (PTL 4) and WO96/29375.

### Inhibition of silicic acid polymerization

The present invention is based on finding obtained by present inventors that water scale can be reduced by inhibiting polymerization of silicic acid and, further, water scale formed can be easily removed. When silicic acid polymerization is inhibited, the size of water scale formed is reduced and the adhesion of the water scale is lowered. The reduction in size of water scale is advantageous since water scale as stains on the surface of the water area equipment is rendered unnoticeable. Further, the present invention is also advantageous in that the adhesion of the water scale is lowered and the formed water scale can be removed by lightly wiping off the water scale.

According to the present invention, water scale formation can be inhibited and also formed water scale can easily be removed. Without being bound by any particular theory, it is believed as follows. In a process of evaporation of water, the concentration of silicic acid in the residual water is increased so that the polymerization of silicic acid is occured to develop a coffee stain phenomenon (a phenomenon that evaporation of solvent in liquid droplets causes a solute to flow towards the contour of liquid droplets and to be deposited in a ring form) and to give robust water scale. On the other hand, it is observed that inhibisiton of the polymerization of silicic acid in the residual water will not make the coffee stain phenomenon despite an increase in solute concentration in the process of evaporation of water component. Instaed, the solvent flows in a center direction. It is also observed that the formed water scale has a low adhesion to the base material and can easily be separated. The result of the present invention that water scale formation is inhibited and, further, formed water scale can easily be removed can also be attained in the case where water contains calcium ions or magnesium ions. Accordingly, the present invention can be advantageously applied to water area equipments utilizing common tap water.

Further, water scale on the surface of the photocatalyst layer causes a deterioration in appearance, as well as a reduction in or disappearance of decomposition action and hydrophilization action of the photocatalyst layer. In the present invention, however, the photocatalytic action is recovered by removing the water scale. Further, even when the water scale is formed resulting in degreased or disappeared photocatalytic activity, the acitivty is again recovered by removing the water scale. Accordingly, in the water area equipment according to the present invention, the appearance can easily be kept clean over a long period of time.

In one preferred embodiment of the present invention, inhibition of the polymerization of silicic acid can be preferably realized by enhancing the acidity of water residual on the surface of the water area equipment. In a more preferred embodiment, pH 1.5 to 5.5, preferably pH 2.0 to 5.0, of the residual water acidity inhimits the polymerization of silicic acid and, consequently, water scale can be inhibited and also, when formed, can be very easily removed. It is believed that, since SiO₂ dissolved in a high acidity water would be mainly present in a state of monomers or a low degree of polymerization such as dimers, polymerization involved by the evaporation of water is inhibited.

Accordingly, in the present invention, the inhibition of water scale formation or the easy removal of the formed scale can be attained by adding an inhibitor for silicic acid polymerization to water adhered as residual water on the surface of the water area equipment. Specific examples of inhibitors for silicic acid polymerization added to water adhered as residual water on the surface of the water area equipment are aqueous solutions having a high acidity, more specifically aqueous solutions that can adjust the acidity of residual water to pH 1.5 to 5.5, preferably pH 2.0 to 5.0. In the present invention, the inhibitor for silicic acid polymerization may be previously added to water to be supplied to the water area equipment to allow the inhibitor to exist in the residual water, or may be supplied before or after the formation of residual water on the surface of the water area equipment.

Accordingly, in the present invention, the inhibition of water scale formation or the easy removal of the formed scale can be attained by adding an inhibitor for silicic acid polymerization to water adhered as residual water on the surface of the photocatalyst layer of the water area equipment. Specific examples of inhibitors for silicic acid polymerization added to water adhered as residual water on the surface of the water area equipment are aqueous solutions having a high acidity, more specifically aqueous solutions that can adjust the acidity of residual water to pH 1.5 to 5.5, preferably pH 2.0 to 5.0. In the present invention, the inhibitor for silicic acid polymerization may be previously added to water to be supplied to the water area equipment to allow the inhibitor to exist in the residual water, or may be supplied before or after the formation of residual water on the surface of the water area equipment.

The aqueous solution for enhancing the acidity of the residual water is not limited as long as the acidity can be regulated. Examples of preferred aqueous solutions are aqueous acid solutions. Specific examples thereof include nitric acid, hydrochloric acid, sulfuric acid, phosphoric acid, boric acid, acetic acid, glycolic acid, citric acid, oxalic acid, lactic acid, and formic acid. More specifically, nitric acid and hydrochloric acid are more preferred from the viewpoint of the fact that an acid is preferred which does not form salts insoluble in calcium and magnesium ions or does not form salts having a low solubility in water.

Another example of aqueous solutions for enhancing the acidity of the residual water include acidic waters produced by electrolysis.

### Addition of metal ions

In a preferred embodiment of the present invention, more effective water scale formation inhibition and easier removal of water scale can be realized by adding a metal ion in addition to the inhibitor for silicic acid polymerization. It is considered that, in the formed water scale, the metal ion is interposed between silicic acid (SiO₂) molecules, and, when water is supplied, for example, by washing, the metal ion is eluted to further weaken an aggregate of silicic acid, whereby the water scale can easily be removed. In particular, in order to restore and maintain the activity of the photocatalyst, the addition of metal ions is preferred. In the present invention, preferred metal ions include Al³⁺, Fe³⁺, Cu²⁺, and Zn²⁺. Among them, Al³⁺ is more preferred because Al³⁺ can be stably present without being dependent upon pH, can more effectively restore and maintain the activity of the photocatalyst, and is not particularly specified in water quality standards. The addition amount is about 0.1 ppm, preferably 1.0 to 5.0 ppm, based on the amount of the residual water.

### Water area equipment

A construction of the water area equipment according to the present invention will be described with reference to the accompanying drawings. Fig. 1 is a conceptual view of a water area equipment. For example, in the drawing, numeral 1 designates an a toilet bowl. In the drawing, numeral 10 designates a water supply unit and a unit configured to add an inhibitor for silicic acid polymerization. The tap water is supplied into an acidic water generator 3 through a valve 2 from A in the drawing. Control is performed in such a manner that, when the top water undergoes adjustment of acidity in the acidic water generator 3, is then supplied into the equipment 1, and is residual on the surface, the polymerization of silicic acid in the residual water can be inhibited. In the construction shown in the drawing, metal ions are added to the tap water having adjusted acidity by a metal ion addition device 4. These series of operations and the adjustment of the acidity are regulated by a control unit 5. Thereafter, the tap water is applied by a coater 6 onto the surface of the equipment 1. When the equipment 1 is a toilet bowl, the coater 6 may also function as groin washing devices, videt devices, or separately provided toilet washing devices. In this case, tap water for washing of excreted urine or stool is separately supplied into the toilet bowl.

Fig. 2 is a diagram showing a construction of a water area equipment according to another embodiment of the present invention. In the drawing, numeral 20 designates a water supply unit and a silicic acid polymerization inhibitor addition unit. Regarding a construction common to that in Fig. 1, like parts are identified with the same reference characters. Tap water is supplied into an electrolyzed acidic water generator 21 through a valve 2 from A in the drawing. The tap water is electrolyzed into an acidic water and an alkaline water. The acidic water is discharged into a path B in the drawing, and the alkaline water is discharged into a path C in the drawing. The acidic water is then fed into a metal ion addition tank 22, and metal ions are added. These series of operation and acidity are regulated by a control unit 5. Thereafter, the tap water is sucked by a pump unit 23 and is coated onto the surface of the equipment 1 by the coater 6.. The alkaline water in the path C is discharged through a path D in the drawing and as such may be discharged as waste water into sewage or alternatively may be supplied into a toilet bowl and discharged as waste water in such an amount that does not inhibit the water scale formation inhibition effect according to the present invention.

Fig. 3 is a conceptual view of a water area equipment, and, in the construction common to that in Fig. 1, like parts are identified with the same reference characters. In the drawing, numeral 1 designates a toilet bowl. A photocatalyst layer 11 is provided on the surface of the equipment 1, and a light (preferably ultraviolet) irradiator 7 that photoexcites a photocatalyst in the photocatalyst layer is provided.

Fig. 4 is a diagram showing a specific construction of a water area equipment in still another embodiment of the present invention. In the drawing, numeral 20 designates a water supply unit and a silicic acid polymerization inhibitor addition unit. In the construction common to that in Figs. 1 to 3, like parts are identified with the same reference characters.

Water scale formation inhibition and restoration of the function of the photocatalyst layer in the present invention will be described by taking, as an example, an embodiment in which the equipment 1 in Figs. 3 and 4 is a toilet bowl. Due to the photocatalytic activity, the photocatalyst layer 11 in the equipment 1 exhibits hydrophilicity on its surface. Before a user utilizes a toilet bowl, a tap water is sprayed from a coater 6 without operating the acidic water generator 3 or 21 and the metal ion addition device 4 or the metal ion addition tank 22. The tap water easily forms a water film because the surface of the toilet bowl is hydrophilic. This water film allows sewage to be discharged by washing of the toilet bowl without fixation on the surface of the toilet bowl. When the tap water is evaporated, water scale is disadvantageously produced by the polymerization of a silicic acid component strongly fixed to the surface of the toilet bowl. Before the evaporation of the residual water adhered onto the surface of the toilet bowl, a tap water of which the acidity has been adjusted and, preferably, to which metal ions as a silicic acid component polymerization inhibitor have been added is spray-added from the coater 6 to the residual water to inhibit the polymerization of the water scale. The water scale, of which the polymerization has been inhibited, can easily be removed by cleaning of the toilet bowl, whereby the photocatalytic action of the photocatalyst layer is restored, and a clean surface is kept by the action of the photocatalyst.

A construction for the delivery of a functional water described, for example, in JP 2004-92278A can be utilized after modification as a specific construction of the water area equipment according to the present invention.

In one preferred embodiment of the present invention, the water area equipment is a sanitary ware having a glaze layer. Any glaze for the formation of the glaze layer provided in the sanitary ware in this embodiment may be utilized and is not particularly limited as long as the glaze can be utilized in sanitary ware. In the present invention, the glaze material is generally defined as a mixture of naturally occurring mineral particles such as quartz sands, feldspars, and limestones. Examples of pigments include cobalt compounds and iron compounds, and examples of opacifiers include zirconium silicate and tin oxide. Amorphous glazes refer to glazes obtained by melting a glaze material formed of a mixture of the naturally occurring mineral particles and the like at an elevated temperature and rapidly cooling the metal for vitrification, and frit glazes are suitable for use. In a preferred embodiment of the present invention, the preferable glaze has a composition comprising, for example, 10 to 30% by weight of feldspar, 15 to 40% by weight of quartz sand, 10 to 25% by weight of calcium carbonate, not more than 10% by weight of each of corundum, talc, dolomite, and zinc flower, and not more than 15% by weight in total of an opacifier and a pigment. In this embodiment according to the present invention, any common sanitary ware base may be used without particular limitation as the base of the sanitary ware. In the production of sanitary ware, at the outset, a ware base is molded into a proper shape by casting, utilizing a water absorptive mold, of a sanitary ware base slurry prepared from raw materials such as quartz sand, feldspar, and clay. Thereafter, the glaze material is coated by a properly selected commonly used method such as spray coating, dip coating, spin coating, or roll coating onto the dried molded body surface.. The molded body with a precursor layer of the surface glaze layer formed thereon is then baked. The baking temperature is preferably a temperature of 1,000 to 1,300°C at which the ware base is sintered and the glaze is softened.

### Method for water scale formation inhibition

As is apparent from the foregoing description, according to the present invention, there is provided a method for inhibiting the formation of water scale on the surface of a member having a possibility that residual water stays on the surface and is evaporated to form water scale, the method comprising at least adding an inhibitor for silicic acid polymerization to water residual on the surface of the member. That is, in this method, when there is a possibility that residual water stays on the surface of the member and is evaporated to form water scale, an inhibitor for silicic acid polymerization is added to the residual water. In this embodiment, a photocatalyst-containing layer is provided on the surface of the member. More preferably, the inhibitor for silicic acid polymerization is preferably an aqueous solution having a high acidity. More preferably, the aqueous solution having a high acidity is an aqueous solution that can adjust the acidity of the residual water to pH 2.0 to 5.0. Also in this embodiment, the aqueous solution having a high acidity further comprises metal ions. This method can be extensively applied to cases where residual water stays on the surface and is possibly evaporated to form water scale. Accordingly, the method according to the present invention is advantageous in that, in a wide variety of member surfaces, water scale formation can be inhibited and, further, formed water scale can be very easily removed. Thus, the method according to the present invention can be applied in a very wide range of applications.

### EXAMPLES

The present invention is further illustrated by the following Examples that are not intended as a limitation of the invention.

In the following Examples, evaluation was made using tiles (5 cm × 5 cm) with a glaze layer formed on a surface thereof, the following pH adjusted waters as testing liquids, and an acidic electrolyzed water as a control. Sliding tests were conducted in the Examples as follows.

### pH adjusted waters and acidic electrolyzed water

Nitric acid (a guaranteed reagent, manufactured by Wako Pure Chemical Industries, Ltd.) was added to common tap water to adjust the tap water to pH 1 to 6. The adjusted solutions were used as pH adjusted waters. The tap water used was analyzed, and the results are shown in Table 1. An acidic electrolyzed water having the following composition was prepared by an electrolyzed water generator (TEK511, manufactured by TOTO, LTD.).

**Table 1**

| | | Unit: mg/L |
|---|---|---|
| | Tap water | Acidic electrolyzed water |
| Na⁺ | 22.7 | 15.7 |
| K⁺ | 3.4 | 1.6 |
| mg²⁺ | 5.2 | 3.2 |
| Ca²⁺ | 27.0 | 17.2 |
| F⁻ | 0.1 | 0.2 |
| Cl⁻ | 19.1 | 29.5 |
| NO₃⁻ | 4.4 | 7.1 |
| SO₄²⁻ | 36.3 | 53.9 |
| Si⁺ | 6.2 | 6.0 |
| pH | 6.9 | 3.3 |

### pH adjusted waters with metal ions added thereto

Aluminum nitrate nonahydrate, iron nitrate nonahydrate, copper nitrate hexahydrate, or zinc nitrate hexahydrate (all products being guaranteed reagents, manufactured by Wako Pure Chemical Industries, Ltd.) was dissolved in tap water to prepare solutions with metal ion concentrations regulated to 1000 ppm which were used as metal ion stock solutions. The metal ion stock solutions were diluted with the pH adjusted waters (pH 1 to 6) to prepare solutions having adjusted metal ion concentrations (0.1, 0.5, 1, 5, and 10 ppm) and pH values (pH 1 to 6). These solutions were used as metal ion-added and pH-adjusted waters.

### Sliding test

The sliding test was carried out with a rubbing tester (manufactured by OHIRA RIKA Industry. Co., Ltd.) by the following method. A sponge piece obtained by cutting a nonwoven fabric sponge Scotch-Brite (SS-72K,, manufactured by Sumitomo 3M Ltd.) into a size of 2.24 cm square was bonded with a pressure sensitive adhesive double coated tape to a head so that the woven fabric part is brought to contact with a sliding surface, followed by wetting with distilled water. A water scale deposited part was observed under a digital microscope (VHX-900, manufactured by Keyence Corp.) at a magnification of 100 times. A weight of 250 g was placed (loading conditions: 4.9 kPa), and sliding was performed ten times, followed by observation under the digital microscope under the same conditions as described above to determine whether or not the water scale had been removed. Sliding of 10 times under loading conditions: 4.9 kPa correspond to conditions for cleaning of toilet bowls. The results were evaluated according to the following criteria.
○: Water scale was removed by sliding of 10 times or less
×: Water sale remained unremoved even by sliding of 50 times.

### Example 1

The water scale removing capability of the pH adjusted waters was evaluated by the following method. At the outset, 20 µL of the pH adjusted water or the acidic electrolyzed water was dropped on the tile (5 cm × 5 cm) with a glaze layer formed on the surface thereof, and the tile was allowed to stand at room temperature for 48 hr to dry and deposit the water scale on the tile, followed by a sliding test. The results were as shown in Table 2.

**Table 2**

| Tap water + nitric acid | | | | | | | | Acidic electrolyzed water |
|---|---|---|---|---|---|---|---|---|
| pH 1.0 | pH 1.5 | pH 2.0 | pH 3.0 | pH 4.0 | pH 450 | pH 5.5 | pH 6.0 | pH 3.3 |
| × | ○ | ○ | ○ | ○ | ○ | ○ | × | ○ |

### Example 2

The water scale removing capability was evaluated in the same manner as in Example 1, except that the aluminum ion-added and pH-adjusted water prepared using aluminum nitrate nonahydrate was used as the testing solution. The results were as shown in Table 3.

**Table 3**

| Al³⁺ | Tap water + nitric acid | | | | | |
|---|---|---|---|---|---|---|
| | pH 1.0 | pH 2.0 | pH 3.0 | pH 4.0 | pH 5.0 | pH 6.0 |
| 10 ppm | ○ | ○ | ○ | ○ | ○ | ○ |
| 5 ppm | × | ○ | ○ | ○ | ○ | ○ |
| 1 ppm | × | ○ | ○ | G | ○ | × |
| 0.5 ppm | × | ○ | ○ | ○ | ○ | × |
| 0.1 ppm | × | ○ | ○ | ○ | ○ | × |

### Example 3

The water scale removing capability was evaluated in the same manner as in Example 1, except that the iron ion-added and pH-adjusted waters prepared using iron nitrate nonahydrate was used as the testing solution. The results were as shown in Table 4.

**Table 4**

| Fe³⁺ | Tap water + nitric acid | | | | | |
|---|---|---|---|---|---|---|
| | pH 1.0 | pH 2.0 | pH 3.0 | pH 4.0 | pH 5.0 | pH 6.0 |
| 10 ppm | ○ | ○ | ○ | ○ | ○ | ○ |
| 5 ppm | ○ | ○ | ○ | ○ | ○ | ○ |
| 1 ppm | × | ○ | ○ | ○ | ○ | × |
| 0.5 ppm | × | ○ | ○ | ○ | ○ | × |
| 0.1 ppm | × | ○ | ○ | ○ | ○ | × |

### Example 4

The water scale removing capability was evaluated in the same manner as in Example 1, except that the copper ion-added and pH-adjusted waters prepared using copper nitrate hexahydrate was used as the testing solution. The results were as shown in Table 5.

**Table 5**

| Cu² | Tap water + nitric acid | | | | | |
|---|---|---|---|---|---|---|
| | pH 1.0 | pH 2.0 | pH 3.0 | pH 4.0 | pH 5.0 | pH 6.0 |
| 10 ppm | × | ○ | ○ | ○ | ○ | ○ |
| 5 ppm | × | ○ | ○ | ○ | ○ | ○ |
| 1 ppm | × | ○ | ○ | ○ | ○ | × |
| 0.5 ppm | × | ○ | ○ | ○ | ○ | × |
| 0.1 ppm | × | ○ | ○ | ○ | ○ | × |

### Example 5

The water scale removing capability was evaluated in the same manner as in Example 1, except that the zinc ion-added and pH-adjusted waters prepared using zinc nitrate hexahydrate was used as the testing solution. The results were as shown in Table 6.

**Table 6**

| Zn²⁺ | Tap water + nitric acid | | | | | |
|---|---|---|---|---|---|---|
| | pH 1.0 | pH 2.0 | pH 3.0 | pH 4.0 | pH 5.0 | pH 6.0 |
| 10 ppm | ○ | ○ | ○ | ○ | ○ | ○ |
| 5 ppm | ○ | ○ | ○ | ○ | ○ | × |
| 1 ppm | × | ○ | ○ | ○ | ○ | × |
| 0.5 ppm | × | ○ | ○ | ○ | ○ | × |
| 0.1 ppm | × | ○ | ○ | ○ | ○ | × |

### Example 6

Various metal ion stock solutions prepared using aluminum nitrate nonahydrate, iron nitrate nonahydrate, copper nitrate hexahydrate, or zinc nitrate hexahydrate (all products being guaranteed reagents, manufactured by Wako Pure Chemical Industries, Ltd.) were added in a proper amount to an acidic electrolyzed water produced with a commercially available electrolyzed water generator (TEK511, manufactured by TOTO, LTD.) for dilution to target metal ion concentrations (0.1 ppm, 0.5 ppm, 1 ppm, 5 ppm, and 10ppm) to prepare metal ion-added acidic electrolyzed waters. The acidic electrolyzed water used was analyzed to determine water quality, and the results are shown in Table 1. The water scale removing capability was evaluated in the same manner as in Example 1, except that the metal ion-added acidic electrolyzed waters were used as the testing solution. The results were as shown in Table 7.

**Table 7**

| | Acidic electrolyzed water (pH 3.3) | | | |
|---|---|---|---|---|
| | Al³⁺ | Fe³⁺ | Cu²⁺ | Zn²⁺ |
| 10 ppm | ○ | ○ | ○ | ○ |
| 5 ppm | ○ | ○ | ○ | ○ |
| 1 ppm | ○ | ○ | ○ | ○ |
| 0.5 ppm | ○ | ○ | ○ | ○ |
| 0.1 ppm | ○ | ○ | ○ | ○ |

### Example 7

### Photocatalyst tile

The following treated tile was used in the following experiment example. The treated tile was prepared by spray-coating a coating liquid comprising TiO₂ and ZrO₂ on a title and baking the coated tile at a temperature of 750°C. The treated tile had, on a glaze layer, a photocatalyst layer having a two-layer structure of an upper layer having a TiO₂ : ZrO₂ composition ratio of 80 : 20 and a lower layer having a TiO₂ : ZrO₂ composition ratio of 75 : 25.

### pH adjusted water and acidic electrolyzed water

Nitric acid (a guaranteed reagent, manufactured by Wako Pure Chemical Industries, Ltd.) was added to common tap water to adjust the tap water to pH 1 to 6. The adjusted solutions were used as pH adjusted waters. The tap water used was analyzed, and the results are shown in Table 8. The concentration of soluble silicic acid (Si0₂) in the tap water was determined by an ICP analysis and was found to be 13.26 ppm.

**Table 8**

| | Unit: mg/L |
|---|---|
| | Tap water |
| Na⁺ | 13.4 |
| K⁺ | 1.9 |
| Mg²⁺ | 6.3 |
| Ca²⁺ | 19.4 |
| F⁻ | n.d. |
| Cl⁻ | 13.4 |
| NO₃⁻ | 4.5 |
| SO₄²⁻ | 26.5 |

### Metal ion-added and pH-adiusted water

Aluminum nitrate nonahydrate (manufactured by Wako Pure Chemical Industries, Ltd.) was dissolved in tap water to prepare a solution having an aluminum concentration of 1000 ppm that was used as an aluminum ion stock solution. The aluminum ion stock solution was diluted with the pH adjusted water to prepare solutions having adjusted aluminum ion concentrations (0.5 ppm, 1.0 ppm, 3.0 ppm, and 5.0 ppm) and pH values (pH 3.5 to 5). These solutions were used as aluminum ion-added and pH-adjusted waters.

### Water scale formation test

A water scale formation test was carried out with an apparatus shown in Fig. 5 as follows. A valve 32 of a water source 31 was opened to discharge a tap water 34 and shower the tap water 34 through a washing water delivery opening 33 onto the surface of a tile 30 for 5 sec to form a water film on the surface of the tile 30. After the elapse of 25 sec from the showering, a valve 35 was opened to introduce water from the water source 31 into a metal ion-containing acidic water generator 36, and the resultant acidic water was sprayed through a spray nozzle 37 for 5 sec. The metal ion-containing acidic water generator 36 comprises an electrolysis tank and a metal ion elution unit provided on the downstream of the electrolysis tank. Thereafter, the tile was allowed to stand for 25 min to form a water scale. This cycle is repeated a predetermined number of times. During the repetition of this cycle, the surface of the tile is always exposed to ultraviolet light emitted from an ultraviolet irradiation unit (not shown).

### Sliding test

The sliding test was carried out with a rubbing tester (manufactured by OHIRA RIKA Industry. Co., Ltd.) by the following method. The tile was immersed in an acid detergent for 5 min. A sponge piece obtained by cutting a nonwoven fabric sponge Scotch-Brite (SS-72K, manufactured by Sumitomo 3M Ltd.) into a size of 2 cm square was bonded with a pressure sensitive adhesive double coated tape to a head so that the woven fabric part was brought to contact with a sliding surface, followed by wetting with distilled water. Sliding was performed ten times under loading conditions: 50 g/cm². Sliding of 10 times under loading conditions: 50 g/cm² corresponds to conditions for common cleaning of toilet bowls.

### Photocatalytic activity evaluation test

A photocatalytic activity evaluation test was carried out according to JIS R-1703-2 "Fine ceramics (advanced ceramics, advanced technical ceramics) - Testing method for self-cleaning performance of photocatalytic materials - Part 2: Decomposition of wet methylene blue."

A photocatalytic activity evaluation test was carried out for the tile to examine a methylene blue decomposition activity. Next, water scale formation test was carried out for the tile using the testing apparatus shown in Fig. 5. Specifically, the aluminum ion-added and pH-adjusted water was deposited on the tile 20 times per day at intervals of 25 min to deposit a water scale to the tile. The tile was then subjected to the sliding test. After the sliding test, the photocatalytic activity evaluation test was again carried out. The results were as shown in Table 9.

**Table 9**

| pH | Al ion (ppm) | Methylene blue decomposition activity (nmol/l/min) | | | Recovery rate |
|---|---|---|---|---|---|
| | | Initial value | After water scale deposition | After sliding test | |
| 3.5 | 5.0 | 11.6 | 0.0 | 10.9 | 94% |
| | 3.0 | 10.4 | 0.1 | 10.7 | 103% |
| 4.0 | 5.0 | 10.6 | 0.0 | 11.4 | 108% |
| | 3.0 | 9.0 | 0.0 | 7.3 | 81% |
| | 1.0 | 8.8 | 0.0 | 7.1 | 81% |
| 4.5 | 5.0 | 12.3 | 0.0 | 11.1 | 90% |
| | 3.0 | 10.0 | 0.0 | 8.3 | 83% |
| | 1.0 | 10.6 | 0.1 | 10.0 | 95% |
| 5.0 | 5.0 | 12.3 | 0.1 | 12.0 | 98% |
| | 3.0 | 12.9 | 2.1 | 11.8 | 91% |
| | 1.0 | 11.7 | 2.2 | 11.3 | 97% |
| 7.0 | 0.0 | 11.2 | 3.0 | 4.9 | 44% |

## Claims

1. A water area equipment comprising a toilet bowl (1) having a surface that comprises a photocatalyst layer as a surface layer and a water supply unit and a unit configured to add an inhibitor for silicic acid polymerization (10) including a coater (6) through which water from a water supply source is to be poured onto the surface of the toilet bowl (1) and to be deposited as residual water, the water supply unit and a unit configured to add an inhibitor for silicic acid polymerization (10) being configured to spray-add an inhibitor for silicic acid polymerization to the residual water before the latter is evaporated.

2. The water area equipment according to claim 1, wherein the inhibitor for silicic acid polymerization is an aqueous acid solution including nitric acid, hydrochloric acid, sulfuric acid, phosphoric acid, boric acid, acetic acid, glycolic acid, citric acid, oxalic acid, lactic acid and formic acid that can adjust the acidity of the residual water to pH 1.5 to 5.5.

3. The water area equipment according to claim 1 or 2, further comprising an acid water generator (3) configured to be supplied with tap water through a valve and to generate the inhibitor for silicic acid polymerization.

4. The water area equipment according to any one of claims 1 to 3, wherein the aqueous acid solution further comprises metal ions.

5. The water area equipment according to any one of claims 1 to 4, wherein the inhibitor for silicic acid polymerization is previously added to water supplied from a water supply source,

6. A method for inhibiting water scale formation on a water area equipment comprising a toilet bowl (1) having a surface that comprises a photocatalyst layer as a surface layer and a water supply unit and a unit configured to add an inhibitor for silicic acid polymerization (10) including a coater (6), the method comprising the steps of:
pouring, through the coater (6), water from a water supply source onto the surface of the toilet bowl (1) and depositing the water as residual water; and
adding, by the water supply unit and a unit configured to add an inhibitor for silicic acid polymerization(10), an inhibitor for silicic acid polymerization to the residual water before the latter is evaporated.

7. The method according to claim 6, wherein the inhibitor for silicic acid polymerization is an aqueous acid solution including nitric acid, hydrochloric acid, sulfuric acid, phosphoric acid, boric acid, acetic acid, glycolic acid, citric acid, oxalic acid, lactic acid and formic acid that can adjust the acidity of the residual water to pH 1.5 to 5.5.

8. The method according to claim 6 or 7, wherein the aqueous acid solution comprises a metal ion.

## Patentansprüche

1. Wasserbereichsausrüstung mit einer Toilettenschüssel (1) mit einer Oberfläche, die eine Photokatalysatorschicht als Oberflächenschicht umfasst, und einer Wasserzufuhreinheit und einer Einheit, die dazu ausgelegt ist, einen Inhibitor für die Kieselsäurepolymerisation (10) zuzugeben, mit einer Beschichtungseinrichtung (6), durch die Wasser von einer Wasserzufuhrquelle auf die Oberfläche der Toilettenschüssel (1) gegossen werden soll und als Restwasser abgeschieden werden soll, wobei die Wasserzufuhreinheit und eine Einheit, die dazu ausgelegt ist, einen Inhibitor für die Kieselsäurepolymerisation (10) zuzugeben, dazu ausgelegt sind, einen Inhibitor für die Kieselsäurepolymerisation auf das Restwasser durch Sprühen zuzugeben, bevor das letztere verdampft wird.

2. Wasserbereichsausrüstung nach Anspruch 1, wobei der Inhibitor für die Kieselsäurepolymerisation eine wässerige Säurelösung, einschließlich Salpetersäure, Salzsäure, Schwefelsäure, Phosphorsäure, Borsäure, Essigsäure, Glycolsäure, Zitronensäure, Oxalsäure, Milchsäure und Ameisensäure, ist, die die Azidität des Restwassers auf pH 1,5 bis 5,5 einstellen kann.

3. Wasserbereichsausrüstung nach Anspruch 1 oder 2, die ferner einen Generator (3) für saures Wasser umfasst, der so ausgelegt ist, dass er mit Leitungswasser durch ein Ventil versorgt wird und den Inhibitor für die Kieselsäurepolymerisation erzeugt.

4. Wasserbereichsausrüstung nach einem der Ansprüche 1 bis 3, wobei die wässerige Säurelösung ferner Metallionen umfasst.

5. Wasserbereichsausrüstung nach einem der Ansprüche 1 bis 4, wobei der Inhibitor für die Kieselsäurepolymerisation vorher zu Wasser zugegeben wird, das von einer Wasserzufuhrquelle zugeführt wird.

6. Verfahren zum Inhibieren einer Wasserkesselsteinbildung an einer Wasserbereichsausrüstung mit einer Toilettenschüssel (1) mit einer Oberfläche, die eine Photokatalysatorschicht als Oberflächenschicht umfasst, und einer Wasserzufuhreinheit und einer Einheit, die dazu ausgelegt ist, einen Inhibitor für die Kieselsäurepolymerisation (10) zuzugeben, mit einer Beschichtungseinrichtung (6), wobei das Verfahren die Schritte umfasst:
Gießen von Wasser von einer Wasserzufuhrquelle durch die Beschichtungseinrichtung (6) auf die Oberfläche der Toilettenschüssel (1) und Abscheiden des Wassers als Restwasser; und
durch die Wasserzufuhreinheit und eine Einheit, die dazu ausgelegt ist, einen Inhibitor für die Kieselsäurepolymerisation (10) zuzugeben, Zugeben eines Inhibitors für die Kieselsäurepolymerisation zum Restwasser, bevor das letztere verdampft wird.

7. Verfahren nach Anspruch 6, wobei der Inhibitor für die Kieselsäurepolymerisation eine wässerige Säurelösung, einschließlich Salpetersäure, Salzsäure, Schwefelsäure, Phosphorsäure, Borsäure, Essigsäure, Glycolsäure, Zitronensäure, Oxalsäure, Milchsäure und Ameisensäure, ist, die die Azidität des Restwassers auf pH 1,5 bis 5,5 einstellen kann.

8. Verfahren nach Anspruch 6 oder 7, wobei die wässerige Säurelösung ein Metallion umfasst.

## Revendications

1. Equipement de salle d'eau comprenant une cuvette de toilette (1) présentant une surface qui comprend une couche de photocatalyseur en tant que couche de surface et une unité d'alimentation en eau et une unité configurée de manière à ajouter un inhibiteur de polymérisation d'acide silicique (10) comportant un dispositif de revêtement (6) à travers lequel de l'eau à partir d'une source d'alimentation en eau doit être versée sur la surface de la cuvette de toilette (1) et être évacuée comme eau résiduelle, l'unité d'alimentation en eau et l'unité configurée de manière à ajouter un inhibiteur de polymérisation d'acide silicique (10) étant configurées de manière à ajouter par pulvérisation un inhibiteur de polymérisation d'acide silicique à l'eau résiduelle avant que cette dernière soit évaporée.

2. Equipement de salle d'eau selon la revendication 1, dans lequel l'inhibiteur de polymérisation d'acide silicique est une solution acide aqueuse comportant de l'acide nitrique, de l'acide chlorhydrique, de l'acide sulfurique, de l'acide phosphorique, de l'acide borique, de l'acide acétique, de l'acide glycolique, de l'acide citrique, de l'acide oxalique, de l'acide lactique et de l'acide formique qui permet d'ajuster l'acidité de l'eau résiduelle à un pH de 1,5 à 5,5.

3. Equipement de salle d'eau selon la revendication 1 ou 2, comprenant, en outre, un générateur d'eau acide (3) configuré de manière à être alimenté avec de l'eau du robinet au moyen d'une vanne et destiné à produire l'inhibiteur de polymérisation d'acide silicique.

4. Equipement de salle d'eau selon l'une quelconque des revendications 1 à 3, dans lequel la solution acide aqueuse comprend, en outre, des ions métalliques.

5. Equipement de salle d'eau selon l'une quelconque des revendications 1 à 4, dans lequel l'inhibiteur de polymérisation d'acide silicique est préalablement ajouté à de l'eau délivrée à partir d'une source d'alimentation en eau.

6. Procédé destiné à empêcher la formation de tartre à partir de l'eau sur un équipement de salle d'eau comprenant une cuvette de toilette (1) présentant une surface qui comprend une couche de photocatalyseur en tant que couche de surface et une unité d'alimentation en eau et une unité configurée de manière à ajouter un inhibiteur de polymérisation d'acide silicique (10) comportant un dispositif de revêtement (6), le procédé comprenant les étapes de :
versement, par l'intermédiaire du dispositif de revêtement (6), d'eau à partir d'une source d'alimentation en eau sur la surface de la cuvette de toilette (1) et évacuation de l'eau en tant qu'eau résiduelle ; et
ajout, par l'unité d'alimentation en eau et une unité configurée de manière à ajouter un inhibiteur de polymérisation d'acide silicique (10), d'un inhibiteur de polymérisation d'acide silicique à l'eau résiduelle avant que cette dernière ne s'évapore.

7. Procédé selon la revendication 6, dans lequel l'inhibiteur de polymérisation d'acide silicique est une solution acide aqueuse comportant de l'acide nitrique, de l'acide chlorhydrique, de l'acide sulfurique, de l'acide phosphorique, de l'acide borique, de l'acide acétique, de l'acide glycolique, de l'acide citrique, de l'acide oxalique, de l'acide lactique et de l'acide formique qui permet d'ajuster l'acidité de l'eau résiduelle à un pH de 1,5 à 5,5.

8. Procédé selon la revendication 6 ou 7, dans lequel la solution aqueuse acide comporte des ions métalliques.
